(19) Europäisches Patentamt
European Patent Office
Office européen des brevets

(11) **EP 2 074 388 B1**

(12) **EUROPEAN PATENT SPECIFICATION**

(45) Date of publication and mention
of the grant of the patent:
**28.07.2010 Bulletin 2010/30**

(51) Int Cl.:
***G01F 1/66*** (2006.01)

(21) Application number: **07826456.1**

(22) Date of filing: **19.09.2007**

(86) International application number:
**PCT/IB2007/053799**

(87) International publication number:
**WO 2008/035297 (27.03.2008 Gazette 2008/13)**

(54) **FLOW SENSOR BASED ON A PIEZOELECTRIC POLYMER FLOW TUBE**

DURCHFLUSSMESSER BASIEREND AUF EINEM PIEZOELEKTRISCHEN POLYMER

CAPTEUR DE DEBIT A BASE DE POLYMERE PIEZOELECTRIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.09.2006 PT 10356506**

(43) Date of publication of application:
**01.07.2009 Bulletin 2009/27**

(73) Proprietor: **Universidade do Minho
4704-553 Braga (PT)**

(72) Inventors:
• **HENRIQUES MINAS, Graça Maria
4800-058 Guimarães (PT)**
• **LANCEROS MENDEZ, Senentxu
4710-057 Braga (PT)**
• **GOMES DA SILVA SENCADAS, Vitor João
4710-057 Braga (PT)**
• **VIEIRA DA ROCHA, José Gerardo
4800-058 Guimarães (PT)**

(74) Representative: **Ferreira, Maria Silvina
Clarke, Modet & Co.
Rua Castilho, 50-9°
1269-163 Lisboa (PT)**

(56) References cited:
**US-A- 4 003 252 US-A1- 2006 052 963**

**Description**

**Scope of the invention**

The present invention relates to the detention of liquid or gas passing through a pipe or tube. This amount or flow is calculated through the introduction of an ultrasound wave by a transducer working as emitter, and the respective reception of the signal by the same or other transducers placed in its neighborhood. The sensor is composed by a single part manufactured from a polymer with piezoelectric features.

**Background of the invention**

In order to detect a flow that crosses a pipe, a flow meter is used whose working principle can be based on ultrasounds. In this case, acoustic waves with frequencies superior to 20 kHz are used. Depending on the geometry, the transducers that emit and receive the ultrasounds can be in direct contact with the fluid to be measured or can be isolated from this by a material that makes the acoustic coupling between the transducer and the fluid.
The main advantages of the use of ultrasound flow sensors are the following:

- There is no blockage for the circulation of the fluid. Therefore, there are no pressure drop zones in the interior of the pipe.
- It does not have any mobile parts, therefore it does not require maintenance.
- It can be used to measure corrosive or semi-liquid fluids such as mud or cement.

Basically, there are two methods for designing ultrasonic flow sensors: those based on the Doppler Effect and those based on the time of transit of ultrasounds.
The Doppler Effect states that sound wave frequencies depend on the emitter or receptor movement in relation to the propagation medium. In order to use this effect in the measurement of liquid flows in a pipe, a transducer emits ultrasounds through the flow at a frequency of 500 kHz. Some particles or air bubbles suspended in the liquid fluid reflect the ultrasounds back to a second transducer that will receive them. The same transducer can emit and receive the sound waves, being in this case necessary that these are pulsed, that is, a pulse is sent, the echo is awaited and only then a second pulse is sent and thus successively. The movement of those particles or air bubbles modifies the frequency of the beam reflected according to the Doppler Effect. The frequency shift is proportional to the speed of those particles and consequently to the speed of the liquid that crosses the pipe. The basic equations that rule this phenomenon are the following:

$$\Delta f = 2 f_T \sin \theta \, \frac{v}{c} \tag{1}$$

$$\frac{\sin \theta_T}{c_T} = \frac{\sin \theta}{c} \tag{2}$$

wherein $\theta_T$ is the angle between the direction of ultrasound propagation and flow direction and $c_T$ is the propagation of the ultrasound in the material that constitutes the emitter.
From equations (1) and (2) it is obtained:

$$v = \frac{\Delta f}{f_T} \frac{c_T}{\sin \theta_T} = K \Delta f, \tag{3}$$

wherein:

$$K = \frac{c_T}{f_T \sin \theta_T}$$

Equation (3) evidences that the fluid speed is proportional to the Doppler frequency shift. By knowing its speed, the flow can be calculated by multiplying it by the area of the pipe. The main inconvenience in the use of the Doppler Effect in measuring flows is that it only works properly in the presence of suspended particles in the fluid.

The flow meters based on the time of transit, as assumed by the name, measure the difference between the time that ultrasounds take to cover a certain distance, both in the flow direction and in the opposite direction. The time of transit in the direction of the flow can be calculated from:

$$T_1 = \frac{L}{c + V \cos \theta}, \qquad (4)$$

wherein $L$ is the distance between the transducers and $\theta$ is the angle between the flow direction and the line that joins both transducers. Likewise, the time of transit in the opposite flow can be calculated from:

$$T_2 = \frac{L}{c - V \cos \theta}. \qquad (5)$$

Equations (4) and (5) can be simultaneously solved in order to $c$ and $v$, the propagation of the sound in the fluid and the fluid speed being attained:

$$c = \frac{L(T_1 + T_2)}{2T_1 T_2} \qquad (6)$$

$$v = \frac{L(T_2 - T_1)}{2T_1 T_2 \cos \theta} \qquad (7)$$

Once again, based on the fluid speed, the flow can be calculated by multiplying it by the area of the pipe.

There are many applications and several methods and geometries that can be used to measure the volumetric flow of fluids. One of these methods uses the Doppler Effect, using the echoes produced in particles or air bubbles suspended in a liquid fluid. Usually one or two piezoelectric transducers (piezocrystals or piezoceramics) are coupled in some way to the pipe in which the fluid to be measured flows. Some of the applications using this effect are presented:

US2005/0209793 describes a flow sensor based on the Doppler Effect in which only one ultrasound transducer is used connected to the pipe. An algorithm is also described for the correction of the quantization error.

JP2004108946 describes a flow sensor based on the Doppler Effect that additionally measures the real propagation of the sound in the liquid in question. In this case, four ultrasonic transducers are used: one for the measurement of the Doppler shift and three for the measurement of sound within the liquid circulating in the pipe.

JP2005241437 describes a flow sensor based on the Doppler Effect in which a technique is used to reduce the influence of the acoustic noise resultant of the reflection between the exterior face of the pipe and the transducer and the reverberation emitted by the transducer itself. An ultrasound transducer assembled in the exterior of the pipe is used.

In US2005011279 and US2005245827 a flow sensor based on the Doppler Effect and a readout system thereof are described. In this case, an ultrasound transducer placed in the exterior of the pipe is used.

WO2005083371 describes a flow sensor based on the Doppler Effect using two ultrasound transducers: one in order to emit the pulses and another to receive the echoes produced. The transducers are placed in the exterior of the pipe.

Another method for measuring the flow trough ultrasonic waves consists of measuring the time of transit of the ultrasound when traveling though the fluid. In this case, piezoelectric transducers (piezocrystals or piezoceramics) are also usually used, being somehow coupled to a pipe in which the flow to be measured circulates. Some documents using this effect are hereinafter presented.

EP1211488A2 describes a flow sensor based on the time of transit and uses two ultrasound transducers connected to a U-shape pipe. The two transducers work alternately as ultrasound emitter/receptor.

GB2300265 describes a flow sensor based on the time of transit and uses four ultrasound transducers and a temperature sensor connected to the pipe. From the ultrasound transducers, two of them determine the time of transit, the third being conceived to measure the sound speed in the fluid and the fourth to measure the thickness of the pipe walls.

GB2400439 describes a flow sensor based on the time of transit and uses two piezoelectric transducers in a ring form placed inside two cuts within the pipe.

WO0003206 describes the use of several ultrasound transducers (at least three) connected to the pipe, allowing measuring flow rates and speeds.

From the known applications using either of the presented methods, only few use piezoelectric polymers (PVDF, for example) instead of the piezocrystals or piezoceramics.

GB2203546 describes the use of a layer from a quarter of the wave length and piezoelectric ceramics to form an oscillator and thus to emit ultrasound.

The above-mentioned invention in GB2220485 uses the vibrations produced by the fluid movement to generate electric voltage in a PVDF film.

The invention referred to in WO0169182 uses a film glued in the exterior of the pipe. The measurement is done by using the electric voltage obtained by the vibration of the movement of the fluid.

US4003252 describes a flow sensor based on ultrasound, comprising a pipe, having incorporated therein annular transducers manufactured from a polymer with piezoelectric characteristics.

Of the known and previously presented state-of-the-art, no technology refers the use of a single pipe made in a piezoelectric polymer similar to the invention now disclosed, which presents the advantages of being a simple, robust and compact system, whose production process presents very few steps, allowing pipe diameters from several micrometers millimeter to tens of centimeters.

US2006052963 describes a flow sensor based on ultrasound, using a pipe made of polymer material, but without mentioning the piezoelectric properties of that pipe.

## Brief description of the figures

Figure 1 shows a drawing of the sensor based on the Doppler effect with a single transducer; pipe manufactured from a piezoelectric polymer (2); electrode in the interior of pipe (3); exterior electrode (1); sound waves (5); direction (4); suspended particles in the fluid (6).

Figure 2 shows a drawing of the sensor based on the Doppler effect comprising two exterior electrodes (1).

Figure 3 shows a drawing of the sensor based on the time of transit using two exterior electrodes (1).

Figure 4 shows a drawing of the sensor based on the time of transit using three exterior electrodes (1).

Figure 5 shows a drawing of the sensor based on the time of transit using four exterior electrodes (1).

Figure 6 is a cross sectional view of the device in figure 4.

## Detailed description of the invention

In any of the two previously presented types of flow sensors, the pipe is manufactured from a piezoelectric polymer (2), where one or more electrodes of conducting material (aluminum, for example) are placed in its interior (3) and one or more electrodes of conducting material are placed in its exterior (1) forming together with the piezoelectric polymer the ultrasound transducers.

The pipe that will derive the flow sensor might be obtained by conventional methods, such as extrusion, injection or another method for polymer processing in tubular form. Once the pipe is obtained, it is subjected to the application of an electric field of about tens of megavolts per meter, being this process known as electric poling of the polymeric material. After the poling step, the metallic contacts are deposited in the polymer surface. The exterior electrodes work as electric contacts for the ultrasound transducers which can also be transmitters or receivers of the sound waves (5).

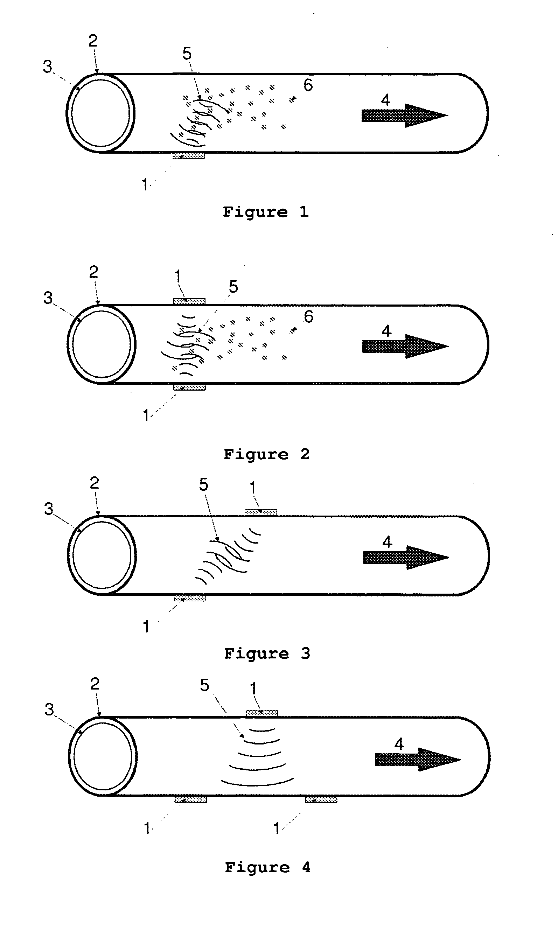

The sensor in figure 1 is based on the Doppler Effect and has only one transducer. This transducer operates as emitter and receiver of the sound waves. The transducer sends sound waves that after striking against any suspended particle in the fluid are reflected by these particles back to the transducer. Once the sound waves are sent, the transducer waits for the reception of its echo, after which a second signal is emitted and so on.

In the sensor of figure 2, the transducer can be continuously sending the ultrasound signal, as a second transducer will receive the waves reflected by the particles.

In both sensors in figures 1 and 2, the particle motion in the fluid alters the frequency of the reflected beam according to the Doppler Effect. The frequency shift is proportional to the speed of these particles and consequently, to the speed of the liquid flowing within the pipe.

In the sensor based on the time of transit in figure 3, both transducers can work as emitters and receivers of the ultrasonic waves. These waves are emitted by the lower transducer in the fluid direction (4) and (5) and depending on the fluid speed, they take more or less time to achieve the upper transducer. The upper transducer equally emits a sound signal, which in the case of this figure 3 is in the direction opposite to the one of the fluid and will be received by the lower transducer. Thus, depending on the time of transit of the ultrasonic waves in the fluid, the sound speed and the fluid are determined.

The sensor of figure 4 uses a transducer in order to emit the ultrasonic waves and two transducers to receive them. Depending on the time they take to arrive to the receiver transducers, the sound speed and the fluid are determined.

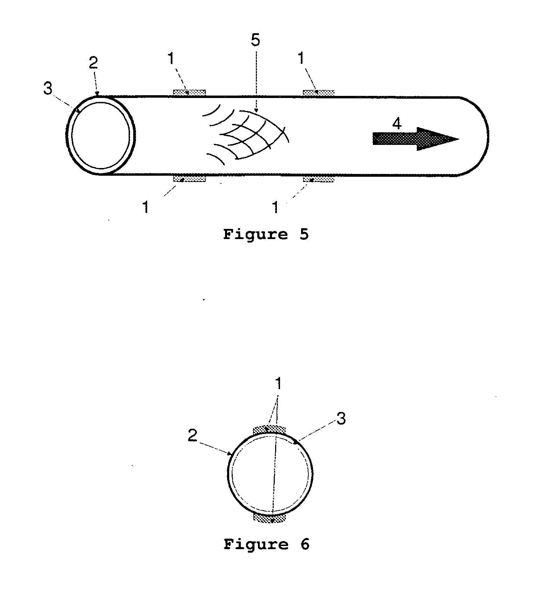

The sensor of figure 5 uses four emitter and receiver transducers of ultrasonic waves. Its behavior is similar to the one of the sensor in figure 3. The control of the emission and reception of the ultrasonic waves can be made by using two transducers as emitters and other two as receivers, always the same, or alternating the emitter and receiver functions between the four transducers. In the case of figure 5, the upper and lower transducers on the left hand are operating as emitters and the other two as receivers.

These different examples of sensors provide different situations of flow measurement: the sensors in figures 1 and 2 use the Doppler Effect and need that the fluids contain suspended particles. Its operating principle is identical, however, the sensor of figure 1 needs more complex readout electronics, once the ultrasonic transducer works alternately as emitter and receiver. The sensors in figures 3, 4 and 5 use the time of transit method and operate in homogeneous fluids. In the case of figures 3 and 5, as ultrasound transducers operate alternately as emitter or receiver, the readout electronics is more complex. The sensor in figure 4 operates in a similar way, but the electronics is simpler, once there's no emitter/ receiver commutation of the ultrasonic transducers. The sensor in figure 5, despite having the most complex configuration, has the advantage of showing a higher resolution in the flow readout.

All these sensors are directly based on the present invention, they constitute non limitative examples of sensor application, which can be subject to modifications and variations carried out by a skilled in the art, the modifications being yet enclosed in the scope of the invention, as defined by the following claims.

**Claims**

1. Flow sensor based on ultrasound, comprising:

   - a pipe or tube (2) manufactured from a polymer with piezoelectric characteristics;
   - one or more conducting electrodes (3) in its interior and one or more electrodes in its exterior (1), forming, together with the piezoelectric polymer, one or more ultrasound transducers.

2. Flow sensor according to claim 1, **characterized in that** the electrodes (1, 3) can be metallic, conducting polymers or of some material leading the electric current.

3. Flow sensor according to claim 1, comprising a conductive electrode in its interior (3) and a conductive electrode in its exterior (1), forming together with the piezoelectric polymer an ultrasound transducer, where the method based on the Doppler effect is used in order to measure the flow.

4. Flow sensor according to claim 1, comprising a conductive electrode in its interior (3) and two conductive electrodes (1) in its exterior, forming together with the piezoelectric polymer two ultrasound transducers, wherein the method based on the Doppler effect is used to measure the flow.

5. Flow sensor according to claim 4 **characterized in that** each transducer operates alternately as emitter or receiver, wherein the method based on the time of transit to measure the flow passing though the pipe (2) is used.

6. Flow sensor according to claim 1, comprising a conducting electrode in its interior (3) and three conducting electrodes (1) in its exterior, forming together with the piezoelectric polymer three ultrasound transducers.

7. Flow sensor according to claim 6, **characterized in that** a transducer operates as emitter and two transducers operate as receivers, wherein the method based on the time of transit to calculate the flow that passes though the pipe (2) is used.

8. Flow Sensor based on ultrasound according to claim 1, comprising a conducting electrode in its interior (3) and four or more electrodes (1) in its exterior, forming together with the piezoelectric polymer four or more ultrasound transducers.

9. Flow sensor according to claim 8, **characterized in that** the transducers can operate alternately as emitters and receivers of ultrasounds, wherein either the method based on the Doppler effect or the method based on the time of transit can be used to calculate the flow that passes though the pipe (2).

10. Process for the manufacture of a flow sensor according to the preceding claims, comprising the following steps:

- extrusion, injection or another method for processing polymeric material in a pipe form;
**characterised by**:
- application of an electric field for the polarization of the polymer;
- deposition of the electrodes.

**Patentansprüche**

1. Auf Ultraschall basierte Flußdetektor, welcher umfasst:

- ein Rohr (2), das aus einem Polymer mit piezoelektrischen Eigenschäfte hergestellt wird;
- eine oder mehr leitende Elektroden (3) in dem Rohr und eine oder mehr Elektroden (1) außer dem Rohr, welche zusammen mit dem piezoelektrischen Polymer, einen oder mehr Ultraschall Transduktoren ausmachen.

2. Flußdetektor nach Anspruch 1, **dadurch gekennzeichnet, daß** die Elektrode (1, 3) aus Metalle, leitenden Polymern oder aus irgendeinem leitenden Material bestehen können.

3. Flußdetektor nach Anspruch 1, welcher eine leitende Elektrode (3) in dem Rohr und eine leitende Elektrode (1) außer dem Rohr umfasst, wohin die Elektrode zusammen mit dem piezoelektrischen Polymer einen Ultraschall Transduktor ausmachen, wohin die den Doppler-Effekt zugrunde liegende Methode um den Fluß zu messen verwendet wird.

4. Flußdetektor nach Anspruch 1, welcher eine leitende Elektrode (3) in dem Rohr und zwei leitende Elektroden (1) außer dem Rohr umfasst, wohin die Elektrode zusammen mit dem piezoelektrischen Polymer zwei Ultraschall Transduktoren ausmachen, wohin die den Doppler-Effekt zugrunde liegende Methode um den Fluß zu messen verwendet wird.

5. Flußdetektor nach Anspruch 4, **dadurch gekennzeichnet, daß** jeder Transduktor als einem Emitter oder einem Empfänger wechselweise betrieb wird, wohin die der Durchflußzeit zugrunde liegende Methode um den Fluß durch das Rohr (2) zu messen verwendet wird.

6. Flußdetektor nach Anspruch 1, welcher eine leitende Elektrode (3) in dem Rohr und drei leitende Elektroden (1) außer dem Rohr umfasst, wohin die Elektrode zusammen mit dem piezoelektrischen Polymer drei Ultraschall Transduktoren ausmachen.

7. Flußdetektor nach Anspruch 6, **dadurch gekennzeichnet, daß** ein Transduktor als einem Emitter und zwei Transduktoren als Empfängern betrieb werden, wohin die der Durchflußzeit zugrunde liegende Methode um den Fluß durch das Rohr (2) zu berechnen verwendet wird.

8. Auf Ultraschall basierte Flußdetektor nach Anspruch 1, welcher eine leitende Elektrode (3) in dem Rohr und vier oder mehr Elektrode (1) außer dem Rohr umfasst, wohin die Elektrode zusammen mit dem piezoelektrischen Polymer vier oder mehr Ultraschall Transduktoren ausmachen.

9. Flußdetektor nach Anspruch 8, **dadurch gekennzeichnet, daß** die Transduktoren als Ultraschallemittern und

- empfängern wechselweise betriebt werden können, wohin entweder die den Doppler-Effekt zugrunde liegende Methode oder der Durchflußzeit zugrunde liegende Methode um den Fluß durch das Rohr (2) zu berechnen verwendet werden können.

**10.** Verfahren zur Herstellung von einem Flußdetektor nach den vorhergehenden Ansprüche, das die folgende Schritte umfasst:

- die Extrusion, die Einspritzung oder irgendeine andere Verfahren um Polymerstoffe auf eine Rohr zu verarbeiten;
**dadurch gekennzeichnet, daß:**
- man ein elektrisches Feld für die Polarisation des Polymers anwendet;
- man die Auflagerung der Elektrode durchführt.

**Revendications**

**1.** Capteur d'écoulement basé sur des ultra-sons, comprenant:

- un tuyau ou tube (2), fabriqué avec un polymère ayant des caractéristiques piézoélectriques;
- un ou plusieurs électrodes conducteurs (3) à l'intérieur du tuyau et un ou plusieurs électrodes à l'extérieur (1) du même, ces électrodes et le polymère piézoélectrique formant ensemble un ou plusieurs capteurs d'ultra-sons.

**2.** Capteur d'écoulement selon la revendication 1, **caractérisé en ce que** les électrodes (1, 3) peuvent être métalliques, en polymères conducteurs ou en n'importe quel matériel conducteur du courant électrique.

**3.** Capteur d'écoulement selon la revendication 1, comprenant un électrode conducteur dans son intérieur (3) et un électrode conducteur dans son extérieur (1), ces électrodes et le polymère piézoélectrique formant ensemble un capteur d'ultra-sons, dans lequel on emploi la méthode basée sur l'effet Doppler, afin de mesurer l'écoulement.

**4.** Capteur d'écoulement selon la revendications 1, comprenant un électrode conducteur dans son intérieur (3) et deux électrodes conducteurs (1) dans son extérieur, ces électrodes et le polymère piézoélectrique formant ensemble deux capteurs d'ultra-sons, dans lesquels on emploi la méthode basée sur l'effet Doppler afin de mesurer l'écoulement.

**5.** Capteur d'écoulement selon la revendication 4, **caractérisé en ce que** chaque capteur travaille alternativement comme un émetteur ou récepteur, dans lequel on emploi la méthode basée sur le temps de passage afin de mesurer le courant qui passe à travers le tuyau (2).

**6.** Capteur d'écoulement selon la revendication 1, comprenant un électrode conducteur dans son intérieur (3) et trois électrodes conducteurs (1) dans son extérieur, ces électrodes et le polymère piézoélectrique formant ensemble trois capteurs d'ultra-sons.

**7.** Capteur d'écoulement selon la revendication 6, **caractérisé en ce qu'**un capteur travaille comme un émetteur et deux capteurs travaillent comme des récepteurs, dans lesquels on emploi la méthode basée sur le temps de passage afin de calculer le courant qui passe à travers le tuyau (2).

**8.** Capteur d'écoulement basé sur des ultra-sons, selon la revendication 1, comprenant un électrode conducteur dans son intérieur (3) et quatre ou plusieurs électrodes (1) dans son extérieur, ces électrodes et le polymère piézoélectrique formant ensemble quatre ou plusieurs capteurs d'ultra-sons.

**9.** Capteur d'écoulement selon la revendication 8, **caractérisé en ce que** les capteurs peuvent travailler alternativement soit comme des émetteurs, soit comme des récepteurs d'ultra-sons, dans lesquels on emploi soit la méthode basée sur l'effet Doppler, soit la méthode basée sur le temps de passage afin de calculer le courant qui passe à travers le tuyau (2).

**10.** Procédé pour la fabrication d'un capteur d'écoulement selon les revendications précédentes, comprenant les étapes suivantes:

- l'extrusion, l'injection ou n'importe quelle autre méthode pour transformer le matériel polymérique sous la forme d'un tuyau;

**caractérisé par** :

- l'application d'un champ électrique pour la polarisation du polymère;
- la déposition des électrodes.

- l'extrusion, l'injection ou n'importe quelle autre méthode pour transformer le matériel polymérique sous la forme d'un tuyau;

**caractérisé par** :

Figure 1

Figure 2

Figure 3

Figure 4

**Figure 5**

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050209793 A
- JP 2004108946 B
- JP 2005241437 B
- US 2005011279 A
- US 2005245827 A
- WO 2005083371 A
- EP 1211488 A2
- GB 2300265 A
- GB 2400439 A
- WO 0003206 A
- GB 2203546 A
- GB 2220485 A
- WO 0169182 A
- US 4003252 A
- US 2006052963 A